# FASCICULE DE BREVET EUROPEEN

(11) **EP 2 536 592 B1**
(45) Date de publication et mention de la délivrance du brevet: **20.11.2013**
(21) Numéro de dépôt: 11706884.1
(22) Date de dépôt: 28.01.2011
(51) Int. Cl.: B60R 5/04

(54) **DISPOSITIF DE SÉPARATION À PLAQUES ESCAMOTABLES SIMULTANÉMENT, POUR UNE ZONE D'UN SYSTÈME**
TRENNVORRICHTUNG MIT SIMULTAN FALTBAREN PLATTEN FÜR EINEN BEREICH EINES SYSTEMS
SEPARATION DEVICE HAVING SIMULTANEOUSLY STOWABLE PLATES AND BEING INTENDED FOR AN AREA OF A SYSTEM

(30) Priorité: 19.02.2010 FR 1051218
(43) Date de publication de la demande: 26.12.2012
(73) Titulaire: Peugeot Citroën Automobiles SA, 78140 Vélizy Villacoublay (FR)
(72) Inventeur: SPEHNER, Maxime, F-25630 Sainte-Suzanne (FR)
(86) Numéro de dépôt international: PCT/FR2011/050174
(87) Numéro de publication internationale: WO 2011/101568

(56) Documents cités:
- EP-A1- 1 762 435
- FR-A1- 2 886 240
- GB-A- 2 440 641
- JP-A- 2008 013 141

## Description

L'invention concerne les dispositifs de séparation qui sont chargés, lorsqu'ils sont déployés, de définir une séparation dans une zone (comme par exemple un coffre arrière) d'un système.

On notera que l'invention concerne tout type de système comportant au moins une zone dans laquelle un logement doit être masqué. Le système pourra donc, notamment et non limitativement, être un véhicule, éventuellement de type automobile.

Comme le sait l'homme de l'art, certaines zones de systèmes, comme par exemple des coffres (arrière ou avant) de véhicule, peuvent comporter un logement défini par des parois latérales (généralement sensiblement verticales), une paroi transversale (généralement sensiblement verticale et s'étendant transversalement entre les parois latérales) et une paroi inférieure de fond (généralement sensiblement horizontale et s'étendant entre les parois latérales et la paroi transversale). Ce logement peut être masqué par un dispositif de séparation conformable, à une ou plusieurs plaques de séparation, comme par exemple l'un de ceux qui sont décrits dans les documents brevet EP 1762435, GB 2440641 et FR 2886240.

On entend ici par "dispositif conformable" un dispositif qui peut être placé dans une position déployée dans laquelle il masque un logement ou dans une position escamotée dans laquelle il permet d'accéder audit logement. On notera qu'un tel dispositif de séparation peut être éventuellement amovible.

Du fait de leurs agencements respectifs, les dispositifs de séparation précités présentent un ou plusieurs inconvénients.

Ainsi, le dispositif décrit dans le document brevet FR 2886240, et qui ne comprend qu'une seule plaque pouvant être placée à différents niveaux d'un logement, impose que ce logement présente des dimensions dans un plan horizontal qui sont sensiblement identiques sur toute sa hauteur. En outre, il impose à l'usager d'exercer des rotations et des translations sur la plaque afin de la déployer ou de l'escamoter. De plus, il nécessite au moins un roulement à billes ce qui le rend relativement onéreux et relativement fragile.

Le dispositif décrit dans le document brevet GB 2440641, et qui comprend deux plaques articulées, ne peut pas être intégralement escamoté à l'intérieur du logement (à masquer) et donc ne peut pas épouser sensiblement ses formes. Il ne peut en effet qu'être plaqué contre (et solidarisé à) la face arrière du dossier d'un siège (ou banquette) en position escamotée.

Le dispositif décrit dans le document brevet EP 1762435, et qui comprend deux plaques articulées, peut être intégralement escamoté à l'intérieur du logement (à masquer) et donc peut épouser sensiblement ses formes (au moins partiellement). Cependant, l'une de ses deux parois ne sert pas au masquage du logement, et donc au portage d'objets. En outre, son escamotage nécessite que l'utilisateur entraîne la plaque principale de support en translation vers l'avant, puis en translation à la fois vers l'arrière et vers le bas, puis en rotation vers le bas, ce qui s'avère relativement compliqué et peu intuitif.

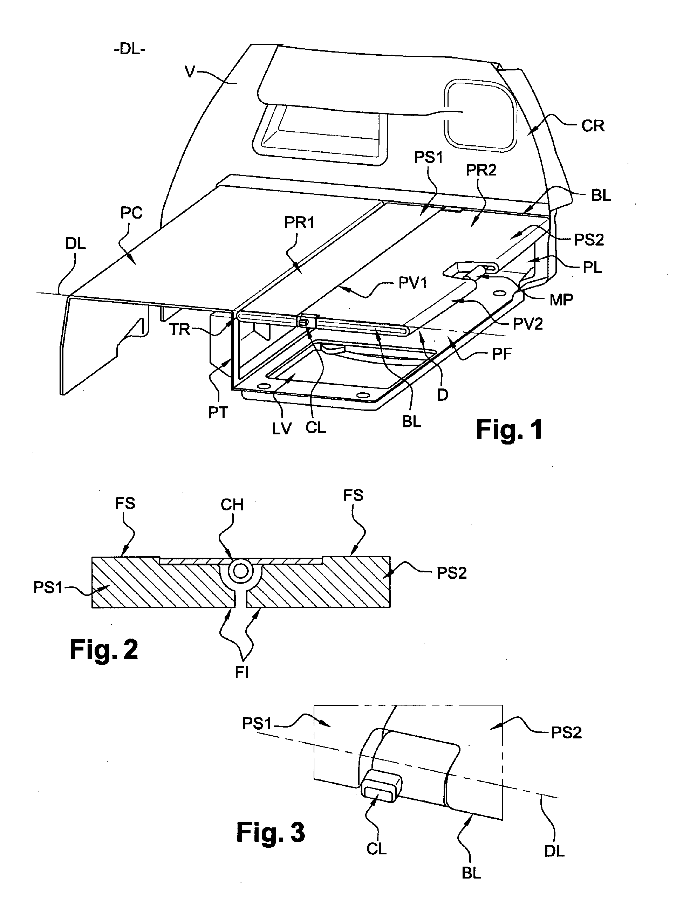

Le document JP 2008 013141 A divulgue un véhicule comportant un plancher, une paroi inférieure dite de fond 4a, une paroi transversale (la face arrière de l'assise du siège arrière 33), la paroi transversale et la paroi inférieure de fond 4a s'étendant transversalement entre deux parois latérales 53, la paroi transversale, les parois latérales 53 et la paroi inférieure de fond 4a définissant un logement, le véhicule comportant en outre un dispositif de séparation conformable 40, apte à masquer une face supérieure du logement située au dessus de ladite paroi inférieure de fond 4a lorsqu'il est déployé (figure 12), ledit dispositif de séparation 40 comprenant i) une première plaque 41 comportant une partie arrière propre à être montée à rotation 52 au voisinage d'une partie supérieure de ladite paroi transversale, et ii) une seconde plaque 42 comprenant une partie arrière montée à rotation 45 sur une partie avant 41 de ladite première plaque et comportant deux cames latérales 44 propres à coulisser respectivement dans deux rainures latérales 54, curvilignes et définies dans lesdites parois latérales 53, de manière à permettre les rabattements conjoints de ladite première plaque 41 contre ladite paroi transversale et de ladite seconde plaque 42 contre ladite paroi inférieure de fond 4a dans une position escamotée (figures 1-4) offrant un accès audit logement.

L'invention a donc pour but de proposer une solution alternative qui ne présente pas tout ou partie des inconvénients précités.

Elle propose à cet effet un véhicule conforme à l'objet de la la revendication 1.

Le véhicule selon l'invention peut comporter d'autres caractéristiques qui peuvent être prises séparément ou en combinaison, et notamment :
- les rainures latérales peuvent présenter un rayon de courbure constant,sensiblement égal à la dimension de la première plaque suivant une direction qui est sensiblement parallèle aux parois latérales ;
- les cames latérales peuvent être propres à coulisser respectivement dans les rainures latérales une fois qu'elles ont été placées selon un intervalle d'orientations choisi par rapport aux rainures latérales par entraînement en rotation de la seconde plaque;
   ➢ chaque rainure latérale peut présenter à l'extrémité de sa partie supérieure un méplat qui est sensiblement parallèle à un bord latéral de la seconde plaque et qui est propre à servir de moyen d'appui à la came latérale correspondante lorsque la seconde plaque est placée en position déployée ;
- la seconde plaque peut comprendre une partie avant qui est munie de moyens de préhension ;
- la seconde plaque peut être propre à s'appuyer, en position déployée, sur des moyens d'appui ;
   ➢ les moyens d'appui peuvent être définis dans une partie supérieure des parois latérales;
- le dispositif de séparation peut être destiné à coopérer avec des parois latérales qui sont des garnitures;
- la partie arrière de la première plaque peut comprendre deux tiges destinées à être logées à rotation dans des encoches latérales ;
   ➢ les encoches latérales peuvent être définies dans une partie supérieure des parois latérales;
- chaque came latérale peut présenter une forme sensiblement ovale dont les deux côtés aplatis sont sensiblement parallèles à des bords latéraux de la seconde plaque où ils sont définis;
- lorsqu'il est placé en position escamotée, ses première et seconde plaques peuvent être sensiblement perpendiculaires entre elles;

D'autres caractéristiques et avantages de l'invention apparaîtront à l'examen de la description détaillée ci-après, et des dessins annexés, sur lesquels :
- la figure 1 illustre schématiquement, dans une vue en perspective, un exemple de coffre arrière de véhicule automobile équipé d'un exemple de réalisation d'un dispositif de séparation selon l'invention en position déployée,
- la figure 2 illustre schématiquement, dans une vue en coupe longitudinale, un exemple de charnière assurant la liaison à rotation des première et seconde plaques du dispositif de séparation de la figure 1,
- la figure 3 illustre schématiquement, dans une vue en perspective, un exemple de came latérale équipant un bord latéral de la seconde plaque du dispositif de séparation de la figure 1,
- les figures 4 et 5 illustrent schématiquement, dans des vues de côté, le coffre arrière de la figure 1 avec son dispositif de séparation placé dans deux positions d'escamotage (ou de déploiement) intermédiaires, et
- les figures 6 et 7 illustrent schématiquement, respectivement dans des vues de côté et en perspective, le coffre arrière de la figure 1 avec son dispositif de séparation placé dans sa position escamotée.

Les dessins annexés pourront non seulement servir à compléter l'invention, mais aussi contribuer à sa définition, le cas échéant.

L'invention a pour but d'offrir un dispositif de séparation (D) conformable et destiné à être implanté dans une zone (CR) d'un système (V) de manière à masquer un logement (LV) qui s'y trouve défini.

Dans ce qui suit, on considère, à titre d'exemple non limitatif, que le système (V) est un véhicule automobile, comme par exemple une voiture. Mais, l'invention n'est pas limitée à ce type de système. Elle concerne en effet tout vehicule comportant au moins une zone (CR) dans laquelle un logement (LV) doit être masqué. Le système pourra donc notamment être un véhicule terrestre, maritime (ou fluvial) ou aérien, par exemple.

Par ailleurs, on considère dans ce qui suit, à titre d'exemple non limitatif, que la zone (CR) du véhicule est un coffre arrière. Mais, l'invention n'est pas limitée à cette application.

On a schématiquement et partiellement représenté sur la figure 1 un exemple de coffre CR de véhicule V défini par une structure (ou caisse). Cette dernière définit un plancher comportant ici une partie surélevée PC et prolongée vers l'arrière et à un niveau inférieur par une paroi inférieure dite de fond PF, via une paroi transversale PT. On entend ici par "transversale" une direction qui est perpendiculaire à la direction longitudinale DL du véhicule V, laquelle est sensiblement parallèle à ses côtés latéraux (ou longitudinaux) comportant les portières.

Par ailleurs, dans ce qui suit les notions "avant" et arrière" sont considérées par rapport à la partie arrière du véhicule. Par conséquent une partie avant d'un élément est une partie qui est généralement située plus près de la partie arrière du véhicule qu'une partie arrière de ce même élément.

La paroi transversale PT est ici sensiblement verticale, mais elle pourrait être inclinée. La paroi inférieure de fond PF s'étend ici approximativement dans un plan horizontal, mais elle pourrait être légèrement inclinée. Par ailleurs, la paroi transversale PT et la paroi inférieure de fond PF s'étendent transversalement entre deux parois latérales PL, qui sont ici sensiblement verticales, mais qui pourraient être légèrement inclinées. Par exemple, ces deux parois latérales PL sont des garnitures qui sont fixées sur la face interne de deux parties latérales arrière de la caisse.

La paroi transversale PT, les parois latérales PL et la paroi inférieure de fond PF définissent un logement LV qui est ici situé dans le prolongement de la partie surélevée PC de la caisse.

Ce logement LV comprend une face supérieure, située au dessus de la paroi inférieure de fond PF, dans le prolongement de la partie surélevée PC de la caisse et destinée à être masquée par un dispositif de séparation conformable D selon l'invention, lorsque ce dernier (D) est placé dans sa position déployée illustrée sur la figure 1.

Un dispositif (de séparation) D, selon l'invention, comprend au moins des première PS1 et seconde PS2 plaques qui sont solidarisées à rotation l'une par rapport à l'autre.

On notera que les première PS1 et seconde PS2 plaques peuvent n'avoir qu'une fonction de masquage du logement LV ou bien avoir à la fois une fonction de masquage du logement LV et une fonction de support d'objet(s). Par conséquent, les plaques peuvent être plus ou moins rigides. Elles peuvent être réalisées dans un matériau métallique ou bien dans une matière plastique, synthétique ou composite au moins semi-rigide.

Plus précisément, la première plaque PS1 comporte une partie arrière PR1, qui est montée à rotation au voisinage d'une partie supérieure de la paroi transversale PT, et une partie avant PV1, opposée à sa partie arrière PR1.

Par exemple, et comme illustré sur les figures 1 et 4 à 7, la partie arrière PR1 de la première plaque PS1 comprend deux tiges TR implantées transversalement et destinées à être logées à rotation dans des encoches latérales (non représentées) que comprend la zone CR (ici le coffre arrière) du véhicule V. Par exemple, ces encoches latérales sont définies dans la partie supérieure des parois latérales PL (ici des garnitures, à titre d'exemple non limitatif). Mais, elles pourraient être définies dans la structure (ou caisse) du véhicule V. Ces tiges TR constituent des axes de rotation. Il pourra donc s'agir de pions de type cylindrique ou conique, éventuellement à facettes.

On notera qu'au lieu d'utiliser des tiges transversales TR pour assurer la rotation, on peut utiliser au moins une charnière solidarisée à la paroi transversale PT ou bien à la partie surélevées PC de la caisse, par exemple.

Cependant l'utilisation de tiges transversales TR est avantageuse car elle confère un caractère amovible au dispositif D étant donné que ce dernier peut alors être facilement désolidarisé du système V.

La seconde plaque PS2 comprend une partie arrière PR2, qui est montée à rotation sur la partie avant PV1 de la première plaque PS1, et une partie avant PV2, opposée à sa partie arrière PR2.

Par exemple, et comme illustré sur la figure 2, la partie arrière PR2 de la seconde plaque PS2 peut être montée à rotation sur la partie avant PV1 de la première plaque PS1 au moyen d'au moins une charnière CH (de préférence en métal). Chaque charnière CH est montée à cheval sur les faces supérieures FS des première PS1 et seconde PS2 plaques, et offre de préférence une rotation limitée à environ 90°.

Par ailleurs, la partie arrière PR2 de la seconde plaque PS2 comporte sur ses deux bords latéraux (ou longitudinaux) BL, opposés l'un à l'autre, deux cames latérales CL implantées transversalement et destinées à coulisser respectivement dans deux rainures latérales RL, curvilignes et définies respectivement dans les deux parois latérales PL (ici des garnitures, à titre d'exemple non limitatif, mais elles pourraient être définies dans la structure (ou caisse) du véhicule V).

La partie arrière PR1 de la première plaque PS1 étant solidarisée (à rotation) aux parois latérales PL via les tiges TR, les rainures latérales RL doivent présenter un rayon de courbure constant, sensiblement égal à la dimension de la première plaque PS1 suivant la direction longitudinale DL, pour que le coulissement des cames latérales CL puisse se faire correctement.

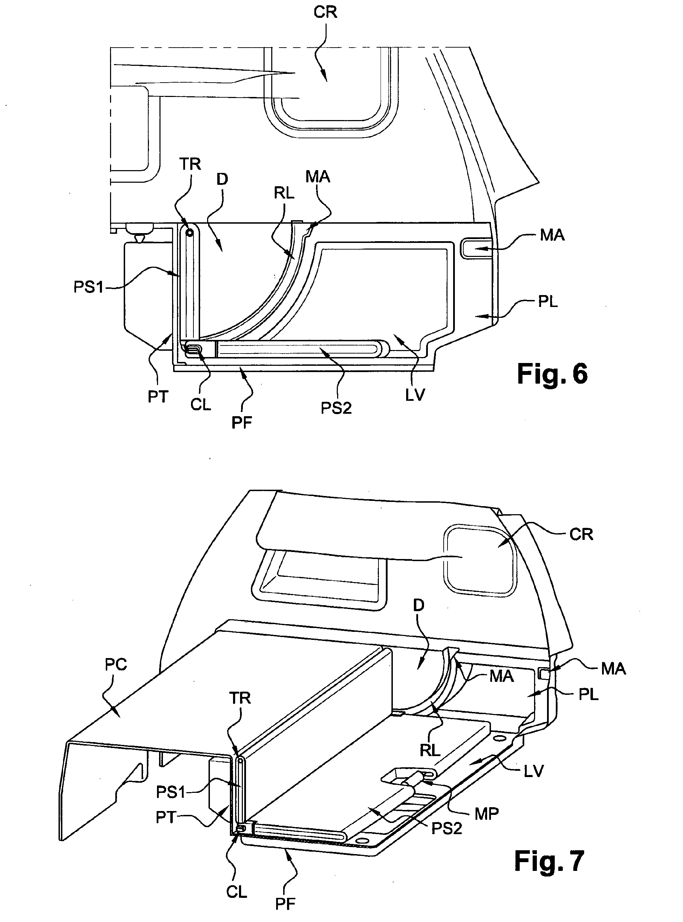

Grâce à ce coulissement un usager peut rabattre conjointement la première plaque PS1 (sensiblement) contre la paroi transversale PT et la seconde plaque PS2 (sensiblement) contre la paroi inférieure de fond PF de manière à placer le dispositif D dans une position escamotée qui offre un accès au logement LV (comme illustré sur les figures 6 et 7). On comprendra que dans cette position escamotée, les première PS1 et seconde PS2 plaques épousent sensiblement la forme d'une partie au moins du logement LV rendant ainsi totalement disponible le volume de ce dernier (LV).

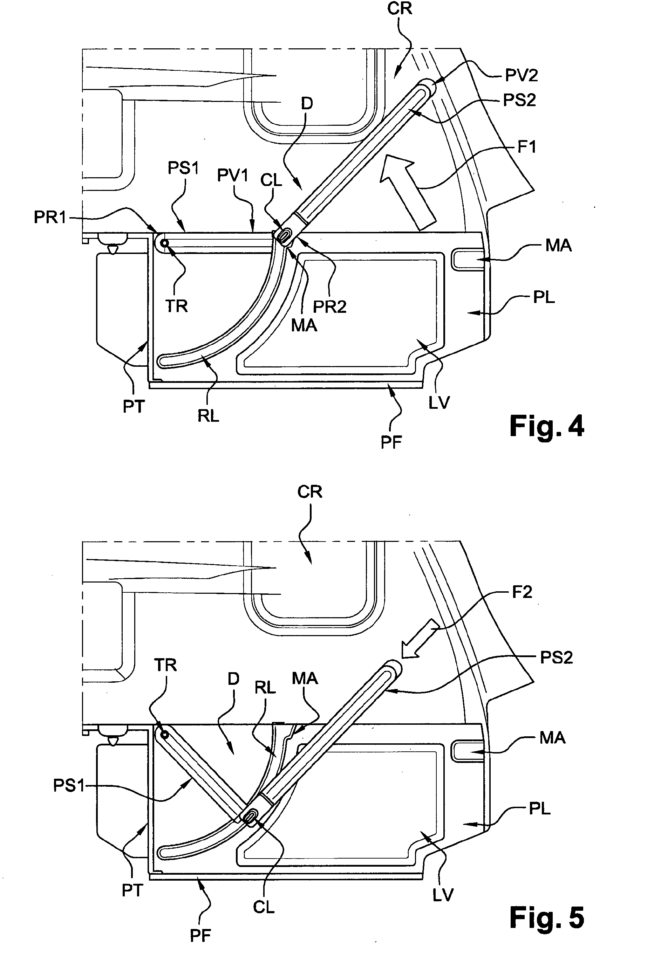

Par exemple, et comme illustré non limitativement sur la figure 3, chaque came latérale CL peut présenter une forme sensiblement ovale. Dans ce cas, chaque came latérale CL comporte deux côtés aplatis qui sont sensiblement parallèles aux bords latéraux BL de la seconde plaque PS2. Cette forme ovale est avantageusement destinée à ne permettre un coulissement dans la rainure latérale RL correspondante que lorsque la came latérale CL est placée selon un intervalle d'orientations choisi par rapport à sa rainure latérale RL, consécutivement à un entraînement en rotation de la seconde plaque PS2 vers le haut (suivant la flèche F1 de la figure 4). Mais, on pourrait envisager que chaque came latérale CL soit de forme générale cylindrique circulaire, par exemple.

Une fois que l'usager a orienté correctement la seconde plaque PS2 (c'est-à-dire par un entraînement en rotation qui autorise le coulissement des cames latérales CL dans les rainures latérales RL (figure 4)), il n'a plus qu'à exercer une légère pression vers le bas sur la seconde plaque PS2 pour faire coulisser ses cames latérales CL dans les rainures latérales RL (flèche F2 de la figure 5) et ainsi provoquer l'entraînement conjoint des première PS1 et seconde PS2 plaques vers le fond du logement LV. Lorsque les cames latérales CL arrivent en butée au niveau des extrémités inférieures des rainures latérales RL, la première plaque PS1 se retrouve (sensiblement) plaquée contre la paroi transversale PT et l'usager n'a plus qu'à lâcher la seconde plaque PS2 (ou bien à l'accompagner en rotation) pour qu'elle vienne se plaquer (sensiblement) contre la paroi inférieure de fond PF. Le dispositif D se retrouve alors placé dans sa position escamotée illustrée sur les figures 6 et 7.

On notera que dans l'exemple illustré où la paroi transversale PT est sensiblement perpendiculaire à la paroi inférieure de fond PF, les première PS1 et seconde PS2 plaques sont sensiblement perpendiculaires entre elles lorsque le dispositif D est placé dans sa position escamotée. Mais, on comprendra que l'angle existant entre les première PS1 et seconde PS2 plaques lorsque le dispositif D est dans sa position escamotée dépend de l'angle existant entre la paroi transversale PT et la paroi inférieure de fond PF.

Si l'usager désire de nouveau déployer le dispositif D, il effectue sensiblement les opérations inverses. Plus précisément, il commence par entraîner légèrement en rotation vers le haut la seconde plaque PS2, puis il la tire vers le haut de manière à faire coulisser ses cames latérales CL dans les rainures latérales RL en entraînant ainsi conjointement les première PS1 et seconde PS2 plaques vers le haut du logement LV. Puis, une fois que les cames latérales CL sont parvenues sensiblement en butée au niveau des extrémités supérieures des rainures latérales RL et donc que la première plaque PS1 se retrouve sensiblement parallèle à la paroi inférieure de fond PF, l'usager n'a plus qu'à lâcher la seconde plaque PS2 (ou bien à l'accompagner en rotation) pour qu'elle vienne se positionner (sensiblement) parallèlement à la paroi inférieure de fond PF, dans le prolongement de la première plaque PS1. Le dispositif D se retrouve alors placé dans sa position déployée illustrée sur la figure 1.

On notera que pour faciliter les manipulations de la seconde plaque PS2, il est avantageux, comme illustré sur les figures 1 et 4 à 7, que sa partie avant PV2 comprenne des moyens de préhension MP. Comme illustré, ces moyens de préhension MP peuvent se présenter sous la forme d'une ouverture définie dans la partie avant PV2, et dans laquelle se trouve éventuellement installée une poignée (éventuellement verrouillable) ou bien une boucle ou encore un cordon.

On notera également que pour maintenir le dispositif D dans sa position déployée, il est avantageux que la seconde plaque PS2 puisse s'appuyer sur des moyens d'appui MA de la zone CR du véhicule V. Comme illustré non limitativement sur les figures 4 à 7, ces moyens d'appui MA peuvent être définis dans une partie supérieure des deux parois latérales PL (ici des garnitures), de préférence au niveau des extrémités supérieures des rainures latérales RL et au voisinage de la zone où se trouve située la partie avant PV2 de la seconde plaque PS2 (une fois déployée). Par exemple, et comme illustré non limitativement, une partie des moyens d'appui MA peut être constituée par deux méplats sensiblement parallèles aux bords latéraux BL (et donc sensiblement horizontaux) qui sont respectivement définis à l'extrémité supérieure des deux rainures latérales RL, et une autre partie des moyens d'appui MA peut être constituée par deux protubérances (déformations locales de matière) ou bien deux pièces rapportées (par exemple clippées ou vissées ou encore collées).

L'invention ne se limite pas aux modes de réalisation véhicule comportent un dispositif de séparation décrit ci-avant, seulement à titre d'exemple, mais elle englobe toutes les variantes que pourra envisager l'homme de l'art dans le cadre des revendications ci-après.

## Revendications

1. Véhicule comportant une caisse définissant un plancher comportant une partie surélevée (PC) se prolongeant vers l'arrière et à un niveau inférieur, par une paroi inférieure dite de fond (PF) via une paroi transversale (PT), la paroi transversale (PT) et la paroi inférieure de fond (PF) s'étendant transversalement entre deux parois latérales (PL), la paroi transversale (PT), les parois latérales (PL) et la paroi inférieure de fond (PF) définissant un logement (LV) situé dans le prolongement de la partie surélevée (PC) de la caisse, la partie de caisse comportant en outre un dispositif de séparation conformable amovible (D), apte à masquer une face supérieure du logement (LV) située au-dessus de la paroi inférieure de fond (PF) lorsqu'il est déployé, ledit dispositif de séparation (D) comprenant i) une première plaque (PS1) comportant une partie arrière (PR1) propre à être montée à rotation au voisinage d'une partie supérieure de ladite paroi transversale (PT), et ii) une seconde plaque (PS2) comprenant une partie arrière (PR2) montée à rotation sur une partie avant (PV1) de ladite première plaque (PS1) et comportant deux cames latérales (CL) propres à coulisser respectivement dans deux rainures latérales (RL), curvilignes et définies dans lesdites parois latérales (PL), de manière à permettre les rabattements conjoints de ladite première plaque (PS1) contre ladite paroi transversale (PT) et de ladite seconde plaque (PS2) contre ladite paroi inférieure de fond (PF) dans une position escamotée offrant un accès audit logement (LV).

2. Véhicule selon la revendication 1, **caractérisé en ce que** lesdites rainures latérales (RL) présentent un rayon de courbure constant, sensiblement égal à la dimension de ladite première plaque (PS1) suivant une direction sensiblement parallèle auxdites parois latérales (PL).

3. Véhicule selon l'une des revendications 1 et 2, **caractérisé en ce que** lesdites cames latérales (CL) sont propres à coulisser respectivement dans lesdites rainures latérales (RL) une fois qu'elles ont été placées selon un intervalle d'orientations choisi par rapport auxdites rainures latérales (RL), par entraînement en rotation de ladite seconde plaque (PS2).

4. Véhicule selon la revendication 3, **caractérisé en ce que** chaque rainure latérale (RL) présente à l'extrémité de sa partie supérieure un méplat (MA) sensiblement parallèle à un bord latéral de ladite seconde plaque (PS2) et propre à servir de moyen d'appui à ladite came latérale (CL) correspondante lorsque ladite seconde plaque (PS2) est placée en position déployée.

5. Véhicule selon l'une des revendications 1 à 4, **caractérisé en ce que** ladite seconde plaque (PS2) comprend une partie avant (PV2) munie de moyens de préhension (MP).

6. Véhicule selon l'une des revendications 1 à 5, **caractérisé en ce que** ladite seconde plaque (PS2) est propre à s'appuyer, en position déployée, sur des moyens d'appui (MA) de ladite zone (CR).

7. Véhicule selon la revendication 6, **caractérisé en ce que** lesdits moyens d'appui (MA) sont définis dans une partie supérieure desdites parois latérales (PL).

8. Véhicule selon l'une des revendications 1 à 7, **caractérisé en ce que** le dispositif de séparation est destiné à coopérer avec des parois latérales (PL) qui sont des garnitures.

9. Véhicule selon l'une des revendications 1 à 8, **caractérisé en ce que** ladite partie arrière (PR1) de la première plaque (PS1) comprend deux tiges (TR) destinées à être logées à rotation dans des encoches latérales que comprend ladite zone (CR) du système (V).

10. Véhicule selon la revendication 9, **caractérisé en ce que** lesdites encoches latérales sont définies dans une partie supérieure desdites parois latérales (PL).

11. Véhicule selon l'une des revendications 1 à 10, **caractérisé en ce que** chaque came latérale (CL) présente une forme sensiblement ovale dont les deux côtés aplatis sont sensiblement parallèles à des bords latéraux de ladite seconde plaque (PS2) où ils sont définis.

## Patentansprüche

1. Fahrzeug, das eine Karosserie aufweist, die einen Boden definiert, dir einen überhöhten Teil (PC) aufweist, der sich nach hinten und zu einem unteren Niveau durch eine untere Wand, Bodenwand (PF) genannt, über eine Querwand (PT) verlängert, wobei sich die Querwand (PT) und die untere Bodenwand (PF) quer zwischen zwei Seitenwänden (PL) erstrecken, wobei die Querwand (PT), die Seitenwände (PL) und die untere Bodenwand (PF) eine Aufnahme (LV) definieren, die sich in der Verlängerung des überhöhten Teils (PC) der Karosserie befindet, wobei der Karosserieteil außerdem eine formbare und abnehmbare Trennvorrichtung (D) aufweist, die geeignet ist, um eine obere Seite der Aufnahme (LV), die sich oberhalb der unteren Bodenwand (PF) befindet, wenn sie ausgebreitet ist, abzudecken, wobei die Trennvorrichtung (D) i) eine erste Platte (PS1) aufweist, die einen hinteren Teil (PR1) aufweist, der geeignet ist, um in Drehung in der Nähe eines oberen Teils der Querwand (PT) montiert zu werden und ii) eine zweite Platte (PS2), die einen hinteren Teil (PR2) aufweist, der in Drehung auf einem vorderen Teil (PV1) der ersten Platte (PS1) montiert ist und zwei seitliche Nocken (CL) aufweist, die geeignet sind, um jeweils in zwei seitlichen Rillen (RL) zu gleiten, die gebogen und in den Seitenwänden (PL) derart definiert sind, dass sie das gemeinsame Herunterklappen der ersten Platte (PS1) gegen die Querplatte (PT) und der zweiten Platte (PS2) gegen die untere Bodenwand (PF) in eine eingefahrene Position, die Zugang zu der Aufnahme (LV) bietet, erlaubt.

2. Fahrzeug nach Anspruch 1, **dadurch gekennzeichnet, dass** die seitlichen Rillen (RL) einen konstanten Krümmungsradius im Wesentlichen gleich dem Maß der ersten Platte (PS1) entlang einer Richtung im Wesentlichen parallel zu den Seitenwänden (PL) aufweisen.

3. Fahrzeug nach einem der Ansprüche 1 und 2, **dadurch gekennzeichnet, dass** die seitlichen Nocken (CL) geeignet sind, um jeweils in den seitlichen Rillen (RL) zu gleiten, sobald sie gemäß einem in Bezug zu den seitlichen Rillen (RL) ausgewählten Intervall von Ausrichtungen durch Antreiben in Drehung der zweiten Platte (PS2) platziert wurden.

4. Fahrzeug nach Anspruch 3, **dadurch gekennzeichnet, dass** jede seitliche Rille (RL) an dem Ende ihres oberen Teils einen Flachteil (MA) im Wesentlichen parallel zu einem Seitenrand der zweiten Platte (PS2) aufweist, und der geeignet ist, um als Auflagemittel für den entsprechenden seitlichen Nocken (CL) zu dienen, wenn die zweite Platte (PS2) in ausgebreiteter Position platziert ist.

5. Fahrzeug nach einem der Ansprüche 1 bis 4, **dadurch gekennzeichnet, dass** die zweite Platte (PS2) einen Vorderteil (PV2), der mit Greifmitteln (MP) versehen ist, aufweist.

6. Fahrzeug nach einem der Ansprüche 1 bis 5, **dadurch gekennzeichnet, dass** die zweite Platte (PS2) geeignet ist, um sich in aufgebreiteter Position auf Auflagemittel (MA) der Zone (CR) zu stützen.

7. Fahrzeug nach Anspruch 6, **dadurch gekennzeichnet, dass** die Auflagemittel (MA) in einem oberen Teil der Seitenwände (PL) definiert sind.

8. Fahrzeug nach einem der Ansprüche 1 bis 7, **dadurch gekennzeichnet, dass** die Trennvorrichtung dazu bestimmt ist, mit Seitenwänden (PL) zusammenzuwirken, die Auskleidungen sind.

9. Fahrzeug nach einem der Ansprüche 1 bis 8, **dadurch gekennzeichnet, dass** der hintere Teil (PR1) der ersten Platte (PS1) zwei Schäfte (TR) aufweist, die dazu bestimmt sind, in Drehung in seitlichen Kerben, die in dem Bereich (CR) des Systems (V) enthalten sind, untergebracht zu sein.

10. Fahrzeug nach Anspruch 9, **dadurch gekennzeichnet, dass** die seitlichen Kerben in einem oberen Teil der Seitenwände (PL) definiert sind.

11. Fahrzeug nach einem der Ansprüche 1 bis 10, **dadurch gekennzeichnet, dass** jeder seitliche Nocken (CL) eine im Wesentlichen ovale Form aufweist, deren zwei abgeflachte Seiten im Wesentlichen zu Seitenrändern der zweiten Platte (PS2), wo sie definiert sind, parallel sind.

## Claims

1. A vehicle comprising a body defining a floor comprising a raised part (PC) extending towards the rear and at a lower level, by a lower wall designated base wall (PF) via a transverse wall (PT), the transverse wall (PT) and the lower base wall (PF) extending transversely between two side walls (PL) the transverse wall (PT), the side walls (PL) and the lower base wall (PF) defining a housing (LV) situated in the extension of the raised part (PC) of the body, the body part further comprising a conformable detachable separation device (D), able to conceal an upper surface of the housing (LV) situated above the lower base wall (PF) when it is opened out, said separation device (D) including i) a first plate (PS1) comprising a rear portion (PR1) suited to be rotatably mounted in the vicinity of an upper portion of said transverse wall (PT), and ii) a second plate (PS2) including a rear portion (PR2) rotatably mounted on a front portion (PV1) of said first plate (PS1) and comprising two side cams (CL) suited to slide respectively in two curvilinear side grooves (RL) defined in said side walls (PL), so as to permit joint closing of said first plate (PS1) against said transverse plate (PT) and of said second plate (PS2) against said lower base wall (PF) in a retracted position offering access to said housing (LV).

2. The vehicle according to Claim 1, **characterized in that** said side grooves (RL) have a constant radius of curvature, substantially equal to the dimension of said first plate (PS1) along a direction substantially parallel to said side walls (PL).

3. The vehicle according to one of Claims 1 and 2, **characterized in that** said side cams (CL) are suited to slide respectively in said side grooves (RL) once they have been placed according to an interval of orientations selected with respect to said side grooves (RL), by entrainment in rotation of said second plate (PS2).

4. The vehicle according to Claim 3, **characterized in that** each side groove (RL) has at the end of its upper portion a flat surface (MA) substantially parallel to a side edge of said second plate (PS2) and suited to serve as a support means to said corresponding side cam (CL) when said second plate (PS2) is placed in opened out position.

5. The vehicle according to one of Claims 1 to 4, **characterized in that** said second plate (PS2) includes a front portion (PV2) provided with gripping means (MP).

6. The vehicle according to one of Claims 1 to 5, **characterized in that** said second plate (PS2) is suited to rest, in opened out position, on support means (MA) of said area (CR).

7. The vehicle according to Claim 6, **characterized in that** said support means (MA) are defined in an upper portion of said side walls (PL).

8. The vehicle according to one of Claims 1 to 7, **characterized in that** the separation device is intended to cooperate with side walls (PL) which are linings.

9. The vehicle according to one of Claims 1 to 8, **characterized in that** said rear portion (PR1) of the first plate (PS1) includes two rods (TR) intended to be housed rotatably in side slots which said area (CR) of the system (V) includes.

10. The vehicle according to Claim 9, **characterized in that** said side slots are defined in an upper portion of said side walls (PL).

11. The vehicle according to one of Claims 1 to 10, **characterized in that** each side cam (CL) has a substantially oval shape, the two flat sides of which are substantially parallel to side edges of said second plate (PS2) where they are defined.
